# EUROPEAN PATENT SPECIFICATION

(11) **EP 4 156 373 B1**
(45) Date of publication and mention of the grant of the patent: **22.01.2025**
(21) Application number: 21208120.2
(22) Date of filing: 15.11.2021
(51) Int. Cl.: H01M 10/42, H01M 50/131, H01M 50/528, H01M 50/531, H01M 50/543, H01M 50/571, H01M 50/583

(54) **BATTERY AND BATTERY APPARATUS**
BATTERIE UND BATTERIEVORRICHTUNG
BATTERIE ET APPAREIL DE BATTERIE

(30) Priority: 23.09.2021 CN 202111116817
(43) Date of publication of application: 29.03.2023
(73) Proprietor: CALB Co., Ltd., Changzhou City, Jiangsu Province (CN)
(72) Inventor: DONG, Yifan, Changzhou City (CN); MA, Ruijun, Changzhou City (CN); XIN, Xiaodong, Changzhou City (CN); ZHANG, Lulu, Changzhou City (CN)
(74) Representative: Becker, Eberhard

(56) References cited:
- US-A1- 2019 237 726

## Description

### BACKGROUND

### Technical Field

The disclosure relates to the technical field of batteries, and in particular, to a battery and a battery apparatus.

### Description of Related Art

In the related art, the positive current collector and the negative current collector of a battery is disposed in the housing. Since the positive current collector is insulated from the housing, the electric potential of the housing is lower. The problem of corrosion of the embedded lithium in the housing may thus occur, and battery performance is thereby affected.

US 2019/237726 A1 discloses an electrical energy accumulation device from electromagnetic attacks. The electrical energy accumulation device comprises a housing made of an electrically conductive material, at least one electrical energy storage cell that is arranged in the housing and two terminals that are arranged through the housing, the terminals being electrically insulated from the housing, the terminals allowing electrical energy to be transferred between the at least one storage cell and the exterior of the device. The device further comprises, inside the housing, a specific component exhibiting an impedance having at least one resistive component that is higher than 1 ohm.

### SUMMARY

The disclosure provides a battery and a battery apparatus.

According to the first aspect of the disclosure, the disclosure provides a battery, and the battery includes a housing, a positive current collector, a negative current collector and a resistor assembly. The positive current collector is disposed at the housing. The negative current collector is disposed at the housing. The positive current collector is electrically connected to the housing through the resistor assembly, and the resistor assembly includes a first resistor and a second resistor arranged in parallel. A resistance value of the first resistor is greater than a resistance value of the second resistor. The positive current collector comprises a fusing structure, the second resistor is disposed between the fusing structure and the housing, and the fuse structure is in electrical series with the second resistor. When a current passing through the fusing structure exceeds a threshold value, the fusing structure disconnects an electrical connection between the positive current collector and the second resistor.

According to the second aspect of the disclosure, the disclosure further provides a battery apparatus including the abovementioned battery.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a schematic diagram of a circuit structure of a battery according to a first exemplary embodiment.
FIG. 2 is a schematic diagram of a circuit structure of a battery apparatus according to an exemplary embodiment.
FIG. 3 is a schematic diagram of a circuit structure of a battery according to a second exemplary embodiment.
FIG. 4 is a schematic diagram of a circuit structure of a battery according to a third exemplary embodiment.
FIG. 5 is a schematic diagram of a circuit structure of a battery according to a fourth exemplary embodiment.
FIG. 6 is a schematic diagram of a circuit structure of a battery which is not according to the invention.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure as defined by the claims.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

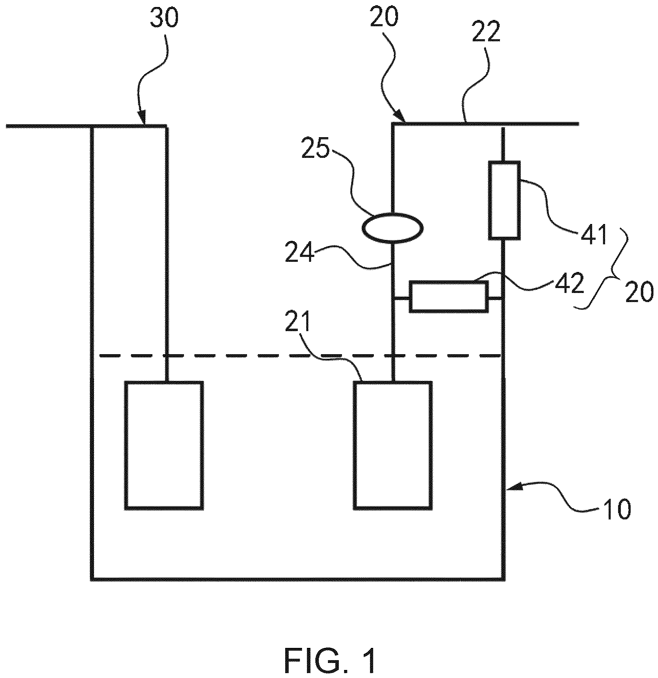

An embodiment of the disclosure provides a battery. With reference to FIG. 1 to FIG. 6, the battery includes a housing 10, a positive current collector 20, a negative current collector 30 and a resistor assembly 40. The positive current collector 20 is disposed at the housing 10. The negative current collector 30 is disposed at the housing 10. The positive current collector 20 is electrically connected to the housing 10 through the resistor assembly 40. The resistor assembly 40 includes a first resistor 41 and a second resistor 42 arranged in parallel. A resistance value of the first resistor 41 is greater than a resistance value of the second resistor 42.

In an embodiment of the disclosure, the battery includes the housing 10, the positive current collector 20, the negative current collector 30, and the resistor assembly 40. The positive current collector 20 is electrically connected to the housing 10 through the resistor assembly 40. The resistor assembly 40 includes the first resistor 41 and the second resistor 42 arranged in parallel, and a resistance value of the first resistor 41 is greater than a resistance value of the second resistor 42. As such, a total resistance value of the first resistor 41 and the second resistor 42 is less than the resistance value of the second resistor 42. In this way, an electric potential of the housing 10 may be increased, the housing 10 may be prevented from being corroded, and performance of the battery is thereby improved.

It should be noted that, as the resistance values of the first resistor 41 and the second resistor 42 are configured to be different and the first resistor 41 and the second resistor 42 are configured to be arranged in parallel; therefore, a resistor with a relatively small resistance value is connected in series between the positive current collector 20 and the housing 10. As such, an electric potential between the positive current collector 20 and the housing 10 is relatively high, and the housing 10 is thereby prevented from being corroded.

In an embodiment, the battery includes a cell and an electrolyte, and the battery is the smallest unit capable of performing electrochemical reactions such as charging/discharging. The cell refers to a unit formed by winding or laminating a stacked part, and the stacked part includes a first electrode, a separator and a second electrode. When the first electrode is a positive electrode, the second electrode is a negative electrode. The polarities of the first electrode and the second electrode may be interchanged. The cell may be disposed in the housing 10.

The positive current collector 20 and the negative current collector 30 may include portions of the cell. The positive current collector 20 may include a positive tab 21, and the negative current collector 30 may include a negative tab 31. The positive current collector 20 may further include a positive terminal component 22, and the negative current collector 30 may further include a negative terminal component 32. The positive tab 21 and the positive terminal component 22 are electrically connected, and the negative tab 31 and the negative terminal component 32 are electrically connected. As such, the cell may perform charging/discharging through the positive terminal component 22 and the negative terminal component 32.

In an embodiment, the positive current collector 20 and the negative current collector 30 are disposed on the housing 10. The positive terminal component 22 of the positive current collector 20 may be located on the housing 10, and the negative terminal component 32 of the negative current collector 30 may be located on the housing 10. A part of the positive terminal component 22 and a part of the negative terminal component 32 may be spaced apart from each other and disposed outside the housing 10.

In some embodiments, the positive current collector 20 and the negative current collector 30 are disposed in the housing 10. The positive tab 21 of the positive current collector 20 may be located in the housing 10, and the negative tab 31 of the negative current collector 30 may be located in the housing 10.

In an embodiment, the resistance value of the first resistor 41 is greater than or equal to 10 MΩ, and the resistance value of the second resistor ranges from 50 S2 to 10,000 Ω. As such, the total resistance value of the first resistor 41 and the second resistor 42 is less than 50 Ω, so it is ensured that the potential between the positive current collector 20 and the housing 10 is maintained at a relatively high value, that is, it is ensured that the potential of the housing 10 is greater than a corrosion potential.

In some embodiments, a voltage between the positive current collector 20 and the housing 10 is less than or equal to 50 mV, that is, the electric potential of the housing 10 may be greater than a corrosion potential. The corrosion potential may be less than or equal to 2V.

In an embodiment, the first resistor 41 and the second resistor 42 of the resistor assembly 40 are not resistor devices provided by the related art. The first resistor 41 and the second resistor 42 may be other structures having specific resistance values. For instance, the first resistor 41 may be a structure made of an insulating material, and the insulating material may be rubber, polyphenylene sulfide, etc., such that the resistance value of the first resistor 41 is relatively large. The second resistor 42 may be a structure made of a semi-conductive material, and the semi-conductive material may be a conductive material made of a conductive fiber doped with polyphenylene sulfide, such that the resistance of the second resistor 42 is relatively small.

In an embodiment, the first resistor 41 includes one or more of a mica insulating material, ceramic, synthetic resin, insulating glue, a fiber product, rubber, plastic and asbestos, such that the resistance value of the first resistor 41 is greater than or equal to 10 MΩ.

A material of the first resistor 41 may be one of a mica insulating material, ceramic, synthetic resin, insulating glue, a fiber product, rubber, plastic and asbestos. Alternatively, the material of the first resistor 41 may be a combination of at least two of a mica insulating material, ceramic, synthetic resin, insulating glue, a fiber product, rubber, plastic and asbestos, so that it is ensured that the first resistor 41 has a relatively large resistance value.

In an embodiment, the second resistor 42 includes one or more of a carbon film resistor, a metal film resistor, a metal oxide and a semiconductor material, such that the resistance value range of the second resistor is 50 Ω to 10,000 Ω. The metal oxide may be a zinc oxide, an aluminum oxide, etc., and the semiconductor material may be doped silicon, gallium arsenide, aluminum gallium arsenide, etc.

A material of the second resistor 42 may be one of a carbon film resistor, a metal film resistor, a zinc oxide, doped silicon, gallium arsenide and aluminum gallium arsenide. Alternatively, the material of the second resistor 42 may be a combination of at least two of a carbon film resistor, a metal film resistor, a zinc oxide, doped silicon, gallium arsenide and aluminum gallium arsenide, so that it is ensured that the second resistor 42 has a relatively small resistance value.

The positive current collector 20 includes a fusing structure 25. Herein, when a current passing through the fusing structure 25 exceeds a threshold value, the fusing structure 25 disconnects the electrical connection between the positive current collector 20 and the second resistor 42. As such, it is thereby ensured that when a short circuit is present in the battery, if a current still exists between the positive current collector 20 and the housing 10, a larger resistance value may be provided between the positive current collector 20 and the housing 10, and a thermal runaway problem may thus be prevented from occurring.

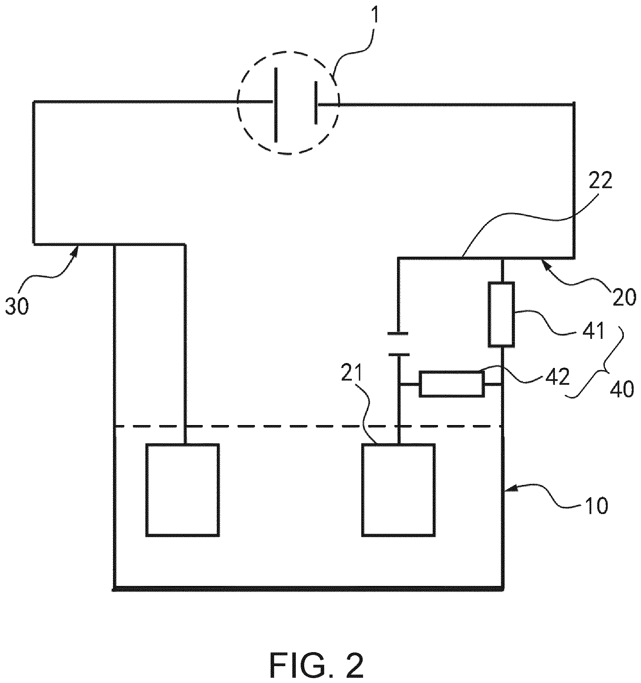

It should be noted that, as shown in FIG. 1, the positive current collector 20 includes the fusing structure 25, and the first resistor 41 and the second resistor 42 are arranged between the positive current collector 20 and the housing 10. As shown in FIG. 2, when the battery is connected into a battery apparatus 1, if there is a short circuit inside the battery, for example, the positive terminal component 22 of the positive current collector 20 and the negative terminal component 32 of the negative current collector 30 are directly connected, due to the presence of the battery apparatus 1, the battery apparatus 1 may apply a reverse high voltage to the short-circuited battery. At this time, the fusing structure 25 is disconnected, and the resistor through which the current flows between the positive current collector 20 and the housing 10 is the first resistor 41. Since the resistance value of the first resistor 41 is larger, the first resistor 41 may not be broken down, and the thermal runaway problem may thus be prevented from occurring.

The fusing structure 25 disconnects the electrical connection between the positive current collector 20 and the second resistor 42, that is, the current between the positive current collector 20 and the housing 10 may not flow through the second resistor 42. In some embodiments, after the fusing structure 25 disconnects the electrical connection between the positive current collector 20 and the second resistor 42, the current between the positive current collector 20 and the housing 10 f only lows through the first resistor 41. Since the resistance value of the first resistor 41 is larger, the first resistor 41 may not be broken down, and the thermal runaway problem may thus be prevented from occurring. In some embodiments, after the fusing structure 25 disconnects the electrical connection between the positive current collector 20 and the second resistor 42, the battery apparatus 1 may be directly disconnected from the battery, that is, there is no current between the positive current collector 20 and the housing 10, and the thermal runaway problem may thus be prevented from occurring.

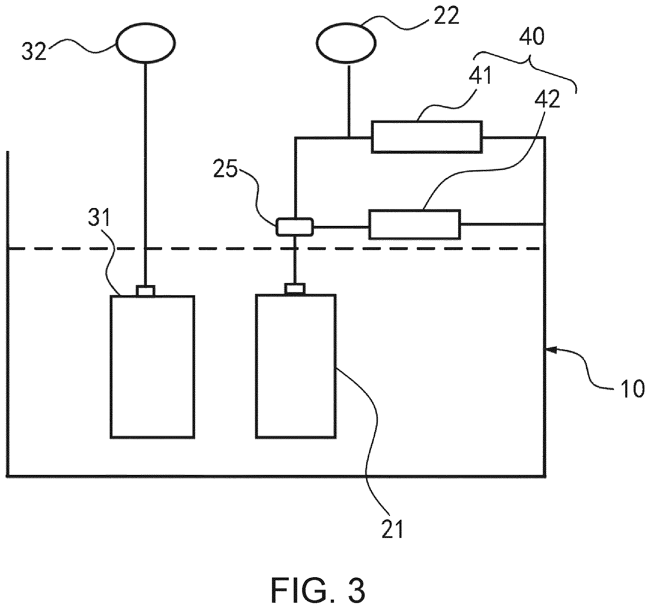

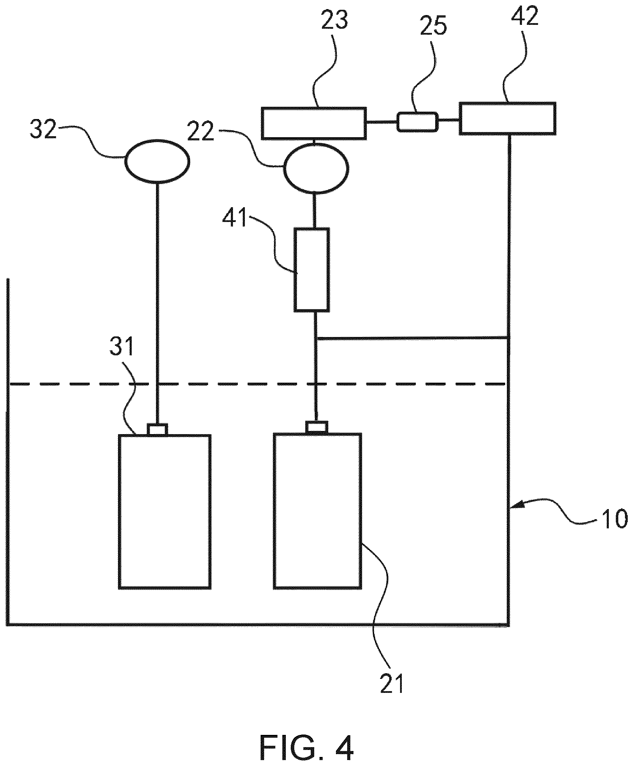

In an embodiment, as shown in FIG. 3 and FIG. 4, the positive current collector 20 further includes the positive terminal component 22, and the housing 10 includes a first housing member and a second housing member connected to each other. Herein, the first resistor 41 is disposed between the positive terminal component 22 and the first housing member, or the first resistor 41 is disposed between the positive terminal component 22 and the second housing member, so that it is ensured that the positive terminal component 22 and the first housing member are connected to each other at least through the first resistor 41. When the battery is in normal use, the first resistor 41 and the second resistor 42 are connected in parallel, so that the problem of corrosion is prevented from occurring. When an excessive current occurs, the fusing structure 25 is disconnected. When a current is provided between the positive current collector 20 and the housing 10, the current may only flow through the first resistor 41, so that the thermal runaway problem is prevented through the first resistor 41.

When the housing 10 is electrically connected to both the first resistor 41 and the second resistor 42, that is, the positive terminal component 22 supplies power to both the first resistor 41 and the second resistor 42, since the first resistor 41 and the second resistor 42 are connected in parallel, the total resistance value is smaller, and the problem of corrosion is prevented from occurring. When the positive terminal component 22 supplies power to the first resistor 41, since the resistance value of the first resistor 41 is larger, the battery is protected, and thermal runaway is prevented from occurring.

In an embodiment, as shown in FIG. 3, the positive current collector 20 further includes the positive tab 21. The fusing structure 25 is connected to the positive tab 21 and the positive terminal component 22, and the second resistor 42 is disposed between the fusing structure 25 and the housing 10. When the current passing through the fusing structure 25 exceeds the threshold value, the fusing structure 25 disconnects the electrical connection between the positive tab 21 and the positive terminal component 22 and the electrical connection between the positive tab 21 and the second resistor 42. In this way, the first resistor 41 may act as an insulator between the positive terminal component 22 and the housing 10, and the thermal runaway problem is accordingly prevented from occurring. In this embodiment, both the first resistor 41 and the second resistor 42 may be disposed between housing 10 and the positive terminal component 22.

In an embodiment, the positive tab 21 and the positive terminal component 22 may be directly connected to each other through the fusing structure 25. The fusing structure 25 may be a fuse structure for safety, and the fuse structure may be at least one of a wire and a fuse. A material of the fuse structure may be selected from a conductive material such as conductive metal, a conductive metal oxide, or other conductive inorganic materials. An insulating structure may be wrapped on a surface of the fuse structure, and the insulating structure may protect the fuse structure.

In an embodiment, as shown in FIG. 1, the positive current collector 20 further includes an adapter piece 24, and the positive tab 21 and the positive terminal component 22 may be connected to each other through the adapter piece 24. At this time, a connection path between the positive tab 21 and the positive terminal component 22 may be further provided with the fusing structure 25. The fusing structure 25 may be a fuse structure, and the fuse structure may be at least one of a wire and a fuse. Alternatively, the fusing structure 25 is disposed on the adapter piece 24. As such, when the fusing structure 25 is disconnected, the adapter piece 24 is also disconnected, and the electrical connection between the positive tab 21 and the positive terminal component 22 and the electrical connection between the positive tab 21 and the second resistor 42 are thereby disconnected.

In some embodiments, the fusing structure 25 may be a portion of the adapter piece 24. For instance, a through hole is provided on the adapter piece 24, so an area of the adapter piece 24 is decreased, and the fusing structure 25 is formed.

In an embodiment, as shown in FIG. 4, the positive current collector 20 further includes a busbar 23. The positive terminal component 22 is electrically connected to the busbar 23, and the fusing structure 25 is connected to the busbar 23 and the second resistor 42. Herein, the second resistor 42 is disposed between the fusing structure 25 and the housing 10. When the current passing through the fusing structure 25 exceeds the threshold value, the fusing structure 25 disconnects the electrical connection between the busbar 23 and the second resistor 42, that is, the electrical connection between the positive terminal component 22 and the second resistor 42 is disconnected. In this way, the first resistor 41 may act as an insulator between the positive terminal component 22 and the housing 10, and the thermal runaway problem is accordingly prevented from occurring. After the fusing structure 25 is disconnected, the current of the battery apparatus 1 is transferred to the first resistor 41 through the busbar 23 and the positive terminal component 22, and thus passes through the housing 10. Due to the presence of the first resistor 41, the electric potential on the housing 10 may not be excessively high, and protection is thereby effectively provided. In this embodiment, the first resistor 41 may be disposed between the housing 10 and the positive terminal component 22, and the second resistor 42 may be disposed between the housing 10 and the busbar 23.

It should be noted that, when the first resistor 41 is located between the positive tab 21 and the positive terminal component 22, the resistance value of the first resistor 41 is required to be kept below a predetermined value, such that the electrical connection between the positive tab 21 and the positive terminal component 22 is ensured, so as to accordingly ensure the normal use of the battery.

In an embodiment, the fusing structure 25 is disposed on the busbar 23. As such, when the fusing structure 25 is disconnected, the busbar 23 is disconnected, and the power supply from the battery apparatus 1 to the battery is thereby disconnected. The busbar 23 is configured to implement the series connection and parallel connection between the batteries. Therefore, after the busbar 23 is disconnected, the connection between the batteries may be disconnected, and the problem of reverse high voltage may not occur in a single battery.

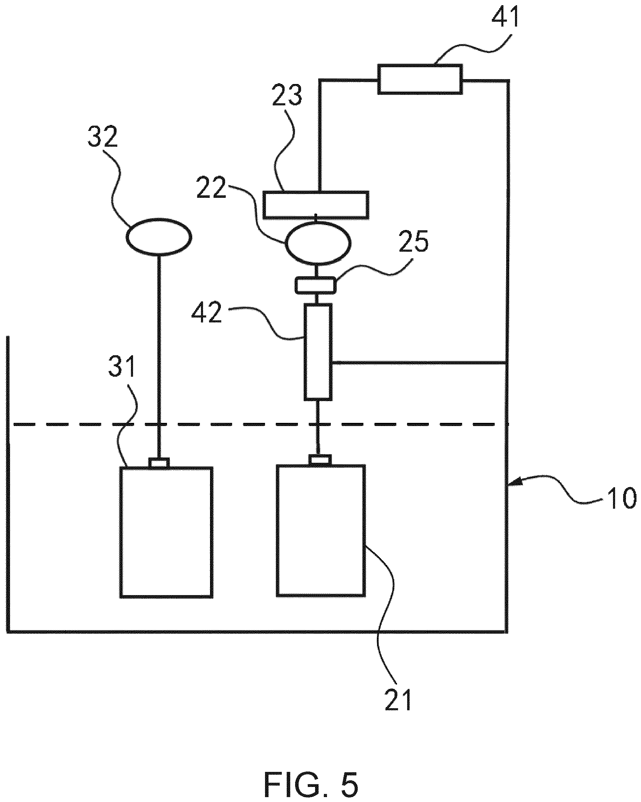

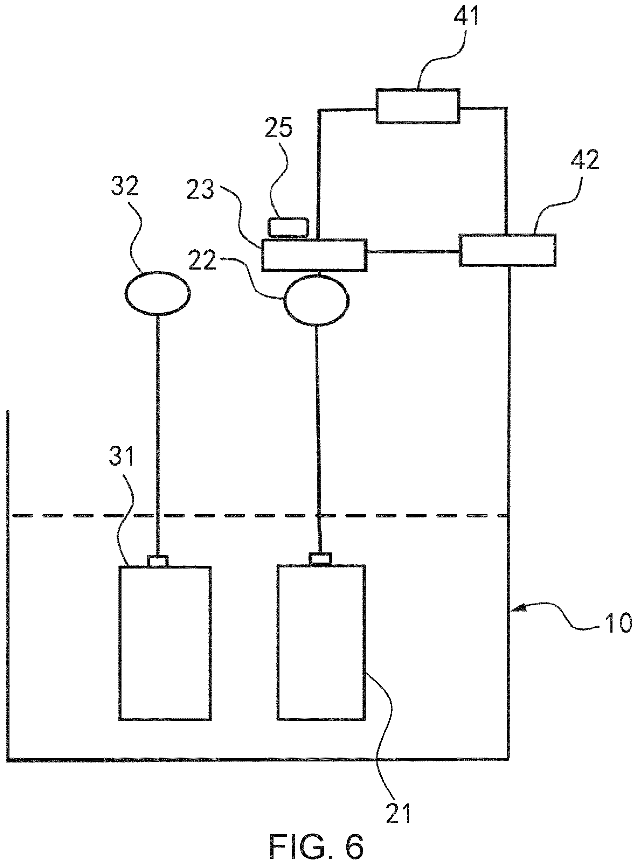

In an embodiment, as shown in FIG. 5 and FIG. 6, the housing 10 includes the first housing member and the second housing member connected to each other. The positive current collector 20 may further include the positive terminal component 22 and the busbar 23, and the positive terminal component 22 is electrically connected to the busbar 23. Herein, the first resistor 41 is disposed between the busbar 23 and the first housing member, or the first resistor 41 is disposed between the busbar 23 and the second housing member. As such, the first resistor 41 may be conveniently installed, and it is also ensured that the positive terminal component 22 and the first housing member are connected to each other at least through the first resistor 41. When the battery is in normal use, the first resistor 41 and the second resistor 42 are connected in parallel, so that the problem of corrosion is prevented from occurring. When an excessive current occurs, the fusing structure 25 is disconnected. When a current is provided between the positive current collector 20 and the housing 10, the current may only flow through the first resistor 41, so that the thermal runaway problem is prevented through the first resistor 41.

In an embodiment, as shown in FIG. 5, the positive current collector 20 further includes the positive tab 21, and the fusing structure 25 is connected to the positive tab 21 and the positive terminal component 22. Herein, the second resistor 42 is disposed between the fusing structure 25 and the housing 10. When the current passing through the fusing structure 25 exceeds the threshold value, the fusing structure 25 disconnects the electrical connection between the positive tab 21 and the positive terminal component 22 and the electrical connection between the positive tab 21 and the second resistor 42. In this way, the first resistor 41 may act as an insulator between the busbar 23 and the housing 10, and the thermal runaway problem is accordingly prevented from occurring. After the fusing structure 25 is disconnected, the current of the battery apparatus 1 is transferred to the first resistor 41 through the busbar 23, and thus passes through the housing 10. Due to the presence of the first resistor 41, the electric potential on the housing 10 may not be excessively high, and protection is thereby effectively provided. In this embodiment, the first resistor 41 is disposed between the housing 10 and the busbar 23, and the second resistor 42 is disposed between the housing 10 and the positive terminal component 22. In some embodiments, the second resistor 42 may not be provided to be connected between the positive tab 21 and the positive terminal component 22. Alternatively, the second resistor 42 may be provided to be connected between the positive tab 21 and the positive terminal component 22, as shown in FIG. 5.

In an embodiment, the first resistor 41 is disposed between the busbar 23 and the first housing member. Alternatively, when the first resistor 41 is disposed between the busbar 23 and the second housing member, the fusing structure 25 may be disposed on the busbar 23. As such, when the fusing structure 25 is disconnected, the busbar 23 is disconnected, and the power supply from the battery apparatus 1 to the battery is thereby disconnected.

In an embodiment, as shown in FIG. 6, the second resistor 42 is disposed between the busbar 23 and the first housing member, or the second resistor 42 is disposed between the busbar 23 and the second housing member, and the fusing structure 25 is disposed on the busbar 23. As such, when the fusing structure 25 is disconnected, the busbar 23 is disconnected, and the power supply from the battery apparatus 1 to the battery is thereby disconnected, and the thermal runaway problem is prevented from occurring. In this embodiment, both the first resistor 41 and the second resistor 42 may be disposed between the housing 10 and the busbar 23.

It should be noted that, the busbar 23 is located outside the housing 10. Therefore, when the first resistor 41 and the second resistor 42 are disposed between the housing 10 and the busbar 23, the first resistor 41 and the second resistor 42 are located outside the housing 10. A portion of the positive terminal component 22 may be located outside the housing 10. When the first resistor 41 and the second resistor 42 are disposed between the housing 10 and the positive terminal component 22, the first resistor 41 and the second resistor 42 are located outside the housing 10. A portion of the positive terminal component 22 may be located inside the housing 10. When the first resistor 41 and the second resistor 42 are disposed between the housing 10 and the positive terminal component 22, the first resistor 41 and the second resistor 42 are located inside the housing 10.

In an embodiment, the first housing member and the second housing member are connected to each other to form a sealed space for sealing the cell. The first housing member or the second housing member may be a cover.

It should be noted that, the structure of the negative current collector 30 is not particularly limited herein, and description thereof may be found with reference to the description of the positive current collector 20. For instance, the negative current collector 30 may include the negative tab 31 and the negative terminal component 32, and the negative tab 31 and the negative terminal component 32 may be directly connected to each other. Alternatively, the negative tab 31 may be connected to the negative terminal component 32 through an adapter piece. The negative current collector 30 may further include a busbar, a fusing structure, or a resistor assembly.

In the battery provided by the embodiments of the disclosure, the first resistor having a large resistance value is connected in series between the positive terminal component and the housing, so the thermal runaway problem caused by the reverse high voltage is prevented. At the same time, the second resistor having a small resistance value is connected between the fusing structure and the housing, and the first resistor and the second resistor are connected in parallel, such that the problem of corrosion is prevented from occurring in the housing.

An embodiment of the disclosure further provides a battery apparatus including the abovementioned battery.

A battery apparatus provided by an embodiment of the disclosure includes the battery, and the battery includes the housing 10, the positive current collector 20, the negative current collector 30 and the resistor assembly 40. The positive current collector 20 is electrically connected to the housing 10 through the resistor assembly 40. The resistor assembly 40 includes the first resistor 41 and the second resistor 42 arranged in parallel, and the resistance value of the first resistor 41 is greater than the resistance value of the second resistor 42. As such, the total resistance value of the first resistor 41 and the second resistor 42 is less than the resistance value of the second resistor 42. In this way, the electric potential of the housing 10 may be increased, the housing 10 may be prevented from being corroded, and performance of the battery apparatus is thereby improved.

In an embodiment, the battery apparatus includes a plurality of batteries, and the plurality of batteries may be connected in series and/or in parallel. The batteries may be connected in series or parallel via the busbar.

In an embodiment, the battery apparatus may a battery module or a battery pack.

The battery module includes a plurality of batteries, and the plurality of batteries may be secured through end plates and side plates.

The battery pack includes a plurality of batteries and a battery box, and the battery box is configured to secure the plurality of batteries.

It should be noted that, the battery pack includes the battery, the battery may be multiple, and the multiple batteries are arranged in the box. Herein, after forming the battery module, the batteries may be installed in the box. Herein, the battery module may include the end plates and the side plates configured for securing the batteries. Alternatively, the batteries may be directly disposed in the box, that is, the batteries are not required to be arranged into groups, and the end plates and the side plates may be removed at this time.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure. The specification and embodiments are illustrative. The invention is defined by the appended claims.

## Claims

1. A battery, comprising:
a housing (10);
a positive current collector (20), disposed at the housing (10);
a negative current collector (30), disposed at the housing (10); and
a resistor assembly (40), wherein the positive current collector (20) is electrically connected to the housing (10) through the resistor assembly (40), and the resistor assembly (40) comprises a first resistor (41) and a second resistor (42) arranged in parallel,
wherein a resistance value of the first resistor (41) is greater than a resistance value of the second resistor (42),
wherein the positive current collector (20) comprises a fusing structure (25), the fuse structure (25) is in electrical series with the second resistor (42), and the second resistor (42) is disposed between the fusing structure (25) and the housing (10),
wherein when a current passing through the fusing structure (25) exceeds a threshold value, the fusing structure (25) disconnects an electrical connection between the positive current collector (20) and the second resistor (42).

2. The battery according to claim 1, wherein the resistance value of the first resistor (41) is greater than or equal to 10 MΩ, and the resistance value of the second resistor (42) ranges from 50 Q to 10,000 Ω.

3. The battery according to claim 1, wherein the positive current collector (20) further comprises a positive terminal component (22), and the housing (10) comprises a first housing member and a second housing member connected to each other,
wherein the first resistor (41) is disposed between the positive terminal component (22) and the first housing member, or the first resistor (41) is disposed between the positive terminal component (22) and the second housing member.

4. The battery according to claim 3, wherein the positive current collector (20) further comprises a positive tab (21), the fusing structure (25) is connected to the positive tab (21) and the positive terminal component (22).

5. The battery according to claim 4, wherein the positive current collector (20) further comprises an adapter piece (24), and the fusing structure (25) is disposed on the adapter piece (24).

6. The battery according to claim 3, wherein the positive current collector (20) further comprises a busbar (23), the positive terminal component (22) is electrically connected to the busbar (23), and the fusing structure (25) is connected to the busbar (23) and the second resistor (42).

7. The battery according to claim 6, wherein the fusing structure (25) is disposed on the busbar (23).

8. The battery according to claim 1, wherein the housing (10) comprises a first housing member and a second housing member connected to each other, the positive current collector (20) further comprises an positive terminal component (22) and a busbar (23), and the positive terminal component (22) is electrically connected to the busbar (23),
wherein the first resistor (41) is disposed between the busbar (23) and the first housing member, or the first resistor (41) is disposed between the busbar (23) and the second housing member.

9. The battery according to claim 8, wherein the positive current collector (20) further comprises a positive tab (21), and the fusing structure (25) is connected to the positive tab (21) and the positive terminal component (22).

10. The battery according to claim 8, wherein the fusing structure (25) is disposed on the busbar (23).

11. The battery according to claim 8, wherein the second resistor (42) is disposed between the busbar (23) and the first housing member, or the second resistor (42) is disposed between the busbar (23) and the second housing member.

12. The battery according to any one of claims 3-11, wherein the first housing member or the second housing member is a cover.

13. The battery according to claim 1, wherein the first resistor (41) comprises one or more of a mica insulating material, ceramic, synthetic resin, insulating glue, a fiber product, rubber, plastic and asbestos, and/or
the second resistor (42) comprises one or more of a carbon film resistor, a metal film resistor, a metal oxide and a semiconductor material.

14. A battery apparatus, comprising the battery according to any one of claims 1-13.

15. The battery apparatus according to claim 14, wherein the battery apparatus is a battery module or a battery pack.

## Patentansprüche

1. Batterie, umfassend:
ein Gehäuse (10);
einen positiven Stromkollektor (20), der an dem Gehäuse (10) angeordnet ist;
einen negativen Stromkollektor (30), der an dem Gehäuse (10) angeordnet ist; und
eine Widerstandsanordnung (40), wobei der positive Stromkollektor (20) über die Widerstandsanordnung (40) elektrisch mit dem Gehäuse (10) verbunden ist und die Widerstandsanordnung (40) einen ersten Widerstand (41) und einen zweiten Widerstand (42) umfasst, die parallel angeordnet sind,
wobei ein Widerstandswert des ersten Widerstands (41) größer als ein Widerstandswert des zweiten Widerstands (42) ist,
wobei der positive Stromkollektor (20) eine Sicherungsstruktur (25) umfasst, die Sicherungsstruktur (25) in elektrischer Reihe mit dem zweiten Widerstand (42) geschaltet ist und der zweite Widerstand (42) zwischen der Sicherungsstruktur (25) und dem Gehäuse (10) angeordnet ist,
wobei, wenn ein Strom, der durch die Sicherungsstruktur (25) fließt, einen Schwellenwert überschreitet, die Sicherungsstruktur (25) eine elektrische Verbindung zwischen dem positiven Stromkollektor (20) und dem zweiten Widerstand (42) trennt.

2. Batterie gemäß Anspruch 1, wobei der Widerstandswert des ersten Widerstands (41) größer oder gleich 10 MΩ ist und der Widerstandswert des zweiten Widerstands (42) in dem Bereich von 50 Ω bis 10.000 Ω liegt.

3. Batterie gemäß Anspruch 1, wobei der positive Stromkollektor (20) ferner ein positives Anschlussbauteil (22) umfasst und das Gehäuse (10) ein erstes Gehäuseelement und ein zweites Gehäuseelement umfasst, die miteinander verbunden sind,
wobei der erste Widerstand (41) zwischen dem positiven Anschlussbauteil (22) und dem ersten Gehäuseelement angeordnet ist oder der erste Widerstand (41) zwischen dem positiven Anschlussbauteil (22) und dem zweiten Gehäuseelement angeordnet ist.

4. Batterie gemäß Anspruch 3, wobei der positive Stromkollektor (20) ferner einen positiven Kontakt (21) umfasst, wobei die Sicherungsstruktur (25) mit dem positiven Kontakt (21) und dem positiven Anschlussbauteil (22) verbunden ist.

5. Batterie gemäß Anspruch 4, wobei der positive Stromkollektor (20) ferner ein Adapterstück (24) umfasst und die Sicherungsstruktur (25) auf dem Adapterstück (24) angeordnet ist.

6. Batterie gemäß Anspruch 3, wobei der positive Stromkollektor (20) ferner eine Sammelschiene (23) umfasst, das positive Anschlussbauteil (22) elektrisch mit der Sammelschiene (23) verbunden ist und die Sicherungsstruktur (25) mit der Sammelschiene (23) und dem zweiten Widerstand (42) verbunden ist.

7. Batterie gemäß Anspruch 6, wobei die Sicherungsstruktur (25) auf der Sammelschiene (23) angeordnet ist.

8. Batterie gemäß Anspruch 1, wobei das Gehäuse (10) ein erstes Gehäuseelement und ein zweites Gehäuseelement umfasst, die miteinander verbunden sind, wobei der positive Stromkollektor (20) ferner ein positives Anschlussbauteil (22) und eine Sammelschiene (23) umfasst und das positive Anschlussbauteil (22) elektrisch mit der Sammelschiene (23) verbunden ist,
wobei der erste Widerstand (41) zwischen der Sammelschiene (23) und dem ersten Gehäuseelement angeordnet ist oder der erste Widerstand (41) zwischen der Sammelschiene (23) und dem zweiten Gehäuseelement angeordnet ist.

9. Batterie gemäß Anspruch 8, wobei der positive Stromkollektor (20) ferner einen positiven Kontakt (21) umfasst und die Sicherungsstruktur (25) mit dem positiven Kontakt (21) und dem positiven Anschlussbauteil (22) verbunden ist.

10. Batterie gemäß Anspruch 8, wobei die Sicherungsstruktur (25) auf der Sammelschiene (23) angeordnet ist.

11. Batterie gemäß Anspruch 8, wobei der zweite Widerstand (42) zwischen der Sammelschiene (23) und dem ersten Gehäuseelement oder der zweite Widerstand (42) zwischen der Sammelschiene (23) und dem zweiten Gehäuseelement angeordnet ist.

12. Batterie gemäß einem der Ansprüche 3 bis 11, wobei das erste Gehäuseelement oder das zweite Gehäuseelement eine Abdeckung ist.

13. Batterie gemäß Anspruch 1, wobei der erste Widerstand (41) eines oder mehrere der folgenden Materialien umfasst: Glimmer-Isoliermaterial, Keramik, Kunstharz, Isolierkleber, ein Faserprodukt, Gummi, Kunststoff und Asbest, und/oder der zweite Widerstand (42) einen oder mehrere der folgenden umfasst: einen Kohleschichtwiderstand, einen Metallschichtwiderstand, ein Metalloxid und ein Halbleitermaterial.

14. Batterievorrichtung, die die Batterie gemäß einem der Ansprüche 1 bis 13 umfasst.

15. Batterievorrichtung gemäß Anspruch 14, wobei die Batterievorrichtung ein Batteriemodul oder ein Batteriepack ist.

## Revendications

1. Batterie comprenant :
un boîtier (10) ;
un collecteur de courant positif (20), disposé sur le boîtier (10) ;
un collecteur de courant négatif (30), disposé sur le boîtier (10) ; et
un ensemble de résistance (40), dans laquelle le collecteur de courant positif (20) est relié de manière électrique au boîtier (10) par l'intermédiaire de l'ensemble de résistance (40), et l'ensemble de résistance (40) comprend une première résistance (41) et une deuxième résistance (42) disposées en parallèle,
dans laquelle une valeur de résistance de la première résistance (41) est supérieure à une valeur de résistance de la deuxième résistance (42),
dans laquelle le collecteur de courant positif (20) comprend une structure de fusion (25), la structure de fusion (25) est en série électrique avec la deuxième résistance (42), et la deuxième résistance (42) est disposée entre la structure de fusion (25) et le boîtier (10),
dans laquelle, lorsqu'un courant traversant la structure fusible (25) dépasse une valeur seuil, la structure fusible (25) déconnecte une connexion électrique entre le collecteur de courant positif (20) et la deuxième résistance (42).

2. Batterie selon la revendication 1, dans laquelle la valeur de résistance de la première résistance (41) est supérieure ou égale à 10 MΩ, et la valeur de résistance de la deuxième résistance (42) est comprise entre 50 Q et 10 000 Q.

3. Batterie selon la revendication 1, dans laquelle le collecteur de courant positif (20) comprend en outre un composant terminal positif (22), et le boîtier (10) comprend un premier élément de boîtier et un deuxième élément de boîtier reliés l'un à l'autre,
dans laquelle la première résistance (41) est disposée entre le composant terminal positif (22) et le premier élément de boîtier, ou dans laquelle la première résistance (41) est disposée entre le composant terminal positif (22) et le deuxième élément de boîtier.

4. Batterie selon la revendication 3, dans laquelle le collecteur de courant positif (20) comprend en outre une languette positive (21), la structure de fusion (25) est reliée à la languette positive (21) et au composant terminal positif (22).

5. Batterie selon la revendication 4, dans laquelle le collecteur de courant positif (20) comprend en outre une pièce d'adaptation (24), et la structure de fusion (25) est disposée sur la pièce d'adaptation (24).

6. Batterie selon la revendication 3, dans laquelle le collecteur de courant positif (20) comprend en outre une barre omnibus (23), le composant terminal positif (22) est relié de manière électrique à la barre omnibus (23), et la structure de fusion (25) est reliée à la barre omnibus (23) et à la deuxième résistance (42).

7. Batterie selon la revendication 6, dans laquelle la structure de fusion (25) est disposée sur la barre omnibus (23).

8. Batterie selon la revendication 1, dans laquelle le boîtier (10) comprend un premier élément de boîtier et un deuxième élément de boîtier reliés l'un à l'autre, le collecteur de courant positif (20) comprend en outre un composant terminal positif (22) et une barre omnibus (23), et le composant terminal positif (22) est relié de manière électrique à la barre omnibus (23),
dans laquelle la première résistance (41) est disposée entre la barre omnibus (23) et le premier élément de boîtier, ou la première résistance (41) est disposée entre la barre omnibus (23) et le deuxième élément de boîtier.

9. Batterie selon la revendication 8, dans laquelle le collecteur de courant positif (20) comprend en outre une languette positive (21), et la structure de fusion (25) est reliée à la languette positive (21) et au composant terminal positif (22).

10. Batterie selon la revendication 8, dans laquelle la structure de fusion (25) est disposée sur la barre omnibus (23).

11. Batterie selon la revendication 8, dans laquelle la deuxième résistance (42) est disposée entre la barre omnibus (23) et le premier élément de boîtier, ou la deuxième résistance (42) est disposée entre la barre omnibus (23) et le deuxième élément de boîtier.

12. Batterie selon l'une quelconque des revendications 3 à 11, dans laquelle le premier élément de boîtier ou le deuxième élément de boîtier est un couvercle.

13. Batterie selon la revendication 1, dans laquelle la première résistance (41) comprend un ou plusieurs matériaux isolants choisis parmi le mica, la céramique, la résine synthétique, la colle isolante, un produit fibreux, le caoutchouc, le plastique et l'amiante, et/ou
la seconde résistance (42) comprend un ou plusieurs éléments choisis parmi une résistance à film de carbone, une résistance à film métallique, un oxyde métallique et un matériau semi-conducteur.

14. Appareil de batterie, comprenant la batterie selon quelconque des revendications 1 à 13.

15. Appareil de batterie selon la revendication 14, dans lequel l'appareil de batterie est un module de batterie ou un pack de batterie.
